# EUROPEAN PATENT APPLICATION

(11) **EP 2 383 464 A1**
(43) Date of publication of application: **02.11.2011**
(21) Application number: 11163775.7
(22) Date of filing: 26.04.2011
(51) Int. Cl.: F03D 1/00, F03D 11/00, F03D 11/04, B66B 9/00

(54) **Elevator for wind energy systems**

(30) Priority: 29.04.2010 US 770396
(71) Applicant: General Electric Company, Schenectady, NY 12345 (US)
(72) Inventor: Nies, Jacob Johannes, 8042 HA, Zwolle (NL)
(74) Representative: Bedford, Grant Richard

(57) **Abstract**

The present disclosure relates to a detachable elevator cabin 10 adapted to be used in a wind energy system, the detachable elevator cabin being adapted to interact with an installed system of an elevator system of a wind energy system and being adapted to be lifted within the tower of the wind energy system, with the installed system being permanently installed in the wind energy system. Further, a wind energy system is provided that includes an installed part of an elevator system, the installed part being permanently installed at the wind energy system and being adapted to temporarily interact with a detachable elevator cabin 10 in order to lifted the detachable elevator cabin 10. Further, a system of a detachable part and an installed part of a wind energy system and a method of reaching the nacelle 25 during for maintenance is provided.

## Description

The present disclosure relates generally to an elevator for wind energy systems, a wind energy system adapted to co-operate with an elevator, a wind park with at least two wind energy systems, a method for arriving at the nacelle of a wind energy system and a method for maintaining a wind energy system.

Wind energy systems are increasingly becoming an important factor in regional economical and ecological goals in power production. A wind energy system is comprised of a rotor, a nacelle with drive train parts, a tower, etc. Presently, wind energy systems with a production of greater than one mega watt are known in the art and installed in many places. Typically, systems with a high power output have rotor diameters of up to 100 meters and more. The tower of the wind energy systems is in most cases also higher than 100 meters.

The tower of wind energy systems typically consists of several tubes that are stacked one on top of another. A ladder is mounted within the stack of tubes so that a person, such as a maintenance engineer, can climb up to the nacelle. Other wind energy systems are equipped with an elevator for arriving at the nacelle. The installation of a permanent elevator in a wind energy system is rather expensive, and increases the maintenance effort of the wind energy system, as the elevators themselves need maintenance.

In known wind energy systems, the tower may have an open structure instead of a stack of tubes. In those wind energy systems, if there is no elevator provided, the climber has no protection against the weather, in particular against precipitation, sun, wind, and temperature. This may be a serious issue in the use of open tower structures.

Consequently, there is a need for improved wind energy systems.

In light of the above, according to one aspect of the present invention, a detachable elevator cabin configured for use in a wind energy system is configured to interact with an installed part of an elevator system of a wind energy system and adapted to be lifted up the tower of the wind energy system. The installed part is permanently installed in the wind energy system.

According to another aspect, a wind energy system is provided with an installed part of an elevator system, the installed part being permanently installed at the wind energy system and being adapted to temporarily interact with a detachable elevator cabin in order to lift the detachable elevator cabin.

According to another aspect, an elevator system is provided including a detachable part and an installed part, the detachable part including a detachable elevator cabin as described herein, and the installed part including the wind energy system as described herein.

According to another aspect, a wind park is provided having at least two wind energy systems, the wind energy systems being provided with an installed part of an elevator system. The installed part is permanently installed at the wind energy system and is adapted to temporarily interact with a detachable elevator cabin in order to lift the detachable elevator cabin. Further, the wind park comprises a detachable elevator cabin adapted to be used in the wind energy systems of the wind park by temporarily interacting with the installed system of the elevator system of the wind energy systems. The detachable elevator cabin is adapted to be lifted within the tower of the wind energy systems.

According to yet another aspect, a method for reaching a desired level of a wind energy system is provided. The wind energy system has a tower and is adapted for interacting with a detachable elevator cabin. The method included positioning a detachable elevator cabin on or at the tower; connecting the detachable elevator cabin with the wind energy system; and lifting the detachable elevator cabin to the level.

According to still another aspect, a method for conducting maintenance work on a wind energy system is provided including the method for reaching the desired level of a wind energy system as described herein.

Various advantages, features, aspects and details that can be combined with embodiments described herein are evident from the dependent claims, the description and the drawings, in which:
Fig. 1 shows a schematic cross-sectional view of the detachable elevator cabin carried on a truck according to embodiments described herein.
Figs. 2, 3, and 4 show schematic cross-sectional views of elements of the installed part of the elevator system according to embodiments described herein.
Fig. 5 is a schematic cross-sectional view of an elevator system according to embodiments described herein.
Fig. 6 is a schematic cross-sectional view of a set of pulleys on a detachable elevator cabin according to embodiments described herein.
Fig. 7 is a schematic cross-sectional view of a drum positioned on the elevator cabin according to embodiments described herein.
Fig. 8 is a schematic cross-sectional view of a guided detachable elevator cabin according to embodiments described herein.
Fig. 9 is a schematic cross-sectional view of a guiding adaptor according to embodiments described herein.
Fig 10 to 13 are schematic cross-sectional cross sections through the tower of a wind energy system according to embodiments described herein, illustrating different positions and shapes of the detachable elevator cabin.
Fig. 14 and 15 schematically show embodiments as described herein.
Fig. 16 is a schematic cross-sectional view of a wind energy system according to embodiments described herein.
Fig. 17 is a schematic view of a wind park having three wind energy systems.

Reference will now be made in detail to the various exemplary embodiments, one or more examples of which are illustrated in the figures. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

Within the following description of the drawings, the same reference numbers refer to the same components. Generally, only the differences with respect to the individual embodiments are described. The structures shown in the drawings are not depicted true to scale but rather serve only for the better understanding of the embodiments.

One embodiment of the present invention provides the use of a detachable elevator cabin that can be used with a multitude of wind energy systems. The detachable elevator cabin may be adapted to accommodate at least one person for transport in the vertical direction. In various embodiments, the cabin is used for alternatively or additionally carrying goods. The detachable elevator cabin may be adapted for detachable connection to the installed part of an elevator system. The installed part may be permanently located at the wind energy system. The detachable part of the elevator system may interact with the installed part of the elevator system during the period of time when maintenance of the wind energy system is undertaken, or other times when transport to the nacelle is desired. The term "detachably" or "detachable" shall specifically highlight the difference to an elevator cabin that is permanently installed at a wind energy system. As will be explained in more detail below, the detachable cabin part of the elevator system as described herein can be conveniently unmounted from the installed part to transfer it to another wind energy system.

The installed part may be adapted to lift the elevator cabin within the wind energy system. According to other embodiments, the installed part is adapted to lift the detachable elevator cabin at the outside of the wind energy system.

In some embodiments, the present disclosure is directed to open structure wind energy systems. In contrary to the closed tubes used to form some wind turbine towers, open structure wind turbines have a tower structure consisting of lattices. Typically, the lattice structure is made of a multitude of bars that are connected in such a way to give the tower desired stability. In some embodiments, the lattice is made of steel. In comparison to closed tube structures, the overall cost reduction for towers with open structures can be significant.

The use of elevators in open structure towers has many benefits. In particular, in high wind energy systems wherein the nacelle is positioned at a height of more than 50m, a person heading to the nacelle by climbing or by using a driven basket is exposed to weather conditions such as rain, storm, snow, or UV-radiation.

According to an aspect, the elevator system as described includes an installed part and a detachable cabin part. The detachable part includes, in one embodiment, at least an elevator cabin. Further elements of the elevator system may be part of the detachable part as will become apparent by the present disclosure. The detachable elevator cabin can be used as an elevator for a multitude of wind energy systems.

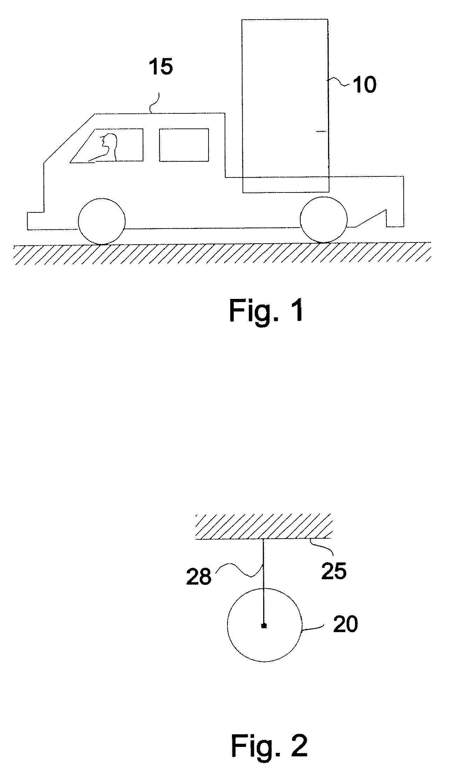

In order to transport the cabin to a wind energy system that, for instance, needs maintenance, the cabin may be transported on a truck or trailer. According to embodiments, the detachable elevator cabin has a set of pulleys, rollers, or the like that allow a single person to maneuver the cabin on flat grounds, such as in the vicinity of the turbine. Fig. 1 shows exemplarily a detachable elevator cabin that rests on a truck for being transported from one wind energy system to another. In Fig. 1, the detachable elevator cabin 10 is positioned on a truck 15. According to embodiments described herein, a maintenance engineer would normally take the detachable elevator cabin along when he goes to the wind energy systems to be maintained.

Further, the system of a detachable elevator cabin and a wind turbine includes a installed part that is arranged in or at the wind energy system. In other words, according to an aspect, the wind turbine includes an installed part for interacting with the detachable part. For instance, the installed part may include one or more rails, or one or more cables on which the elevator cabin is lifted. Typically, the installed part includes at least one pulley that is normally positioned in the nacelle or in the upper part of the tower.

The wind energy system, or, more precisely, the installed part of the elevator system at the wind energy system, may include a drive adapted for lifting the elevator cabin. The pulley may be connected to the drive. In other embodiments, the drive is situated on or in the detachable elevator cabin so that the installed part does not comprise a drive. The drive has to be adapted for lifting the cabin along with one person standing within. Generally, it might be helpful to provide a counterweight in order to reduce the drive's size.

An exemplary embodiment of an installed part is shown in Fig. 2. Herein, a pulley 20 is shown that is adapted for receiving the cable for lifting the elevator cabin. The pulley can be mounted on the nacelle 25 by a mounting device 28.

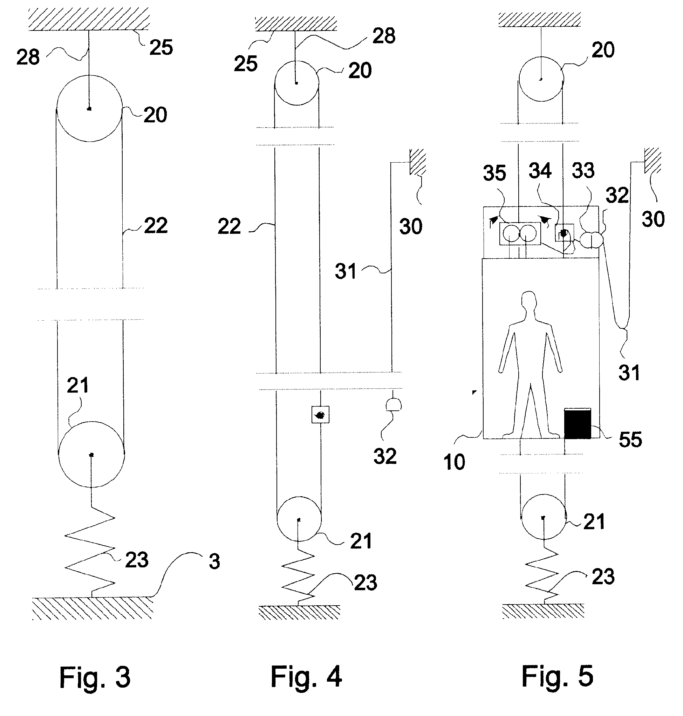

Fig. 3 shows an embodiment wherein the installed part includes a first pulley 20 positioned on the top of the wind energy system and a second pulley 21 positioned on the bottom of the wind energy system. This embodiment allows a better guidance of the elevator cabin. The dashed lines shall indicate that the drawing is not true to scale but the cables are much longer. In typical embodiments, the elevator system is adapted for lifting the detachable elevator cabin at least 60 meters, more typically at least 80 meters. The cable is denoted as reference 22 in the embodiment of Fig. 3. The pulley positioned close to the bottom of the wind turbine is fixed directly or indirectly to the wind energy system by an elastic device that may comprise a spring or the like in order to compensate for tension peaks. The elastic device is exemplarily shown as a spring in the embodiment of Fig. 3 and denoted as reference number 23.

Typically, the detachable elevator cabin is lifted by a cable system including at least one cable. The cable system might have elements being part of the detachable part and elements being part of the installed part of the elevator system. According to embodiments of a cable system, the installed part and/or the detachable part could also include a set of pulleys in order to provide for one or more pulleys. This allows the force in the cable to be reduced and/or provides the possibility to have more than one cable act as a fall-arrester. Typically, at least one of the pulleys has a full arrester function that prevents the elevator cabin from crashing due to elevator malfunction. Generally, one can have uni-directional or bi-directional fall-arresters. The latter are positioned on both sides of the pulley, so that the elevator cabin is prevented from crashing regardless of on which side of the pulley the cable breakage occurs.

According to embodiments, the power supply can be arranged by connecting a cable from the wind turbine tower to the elevator cabin. Therefore, the wind energy system may generally have an electric power output adapted for connecting the elevator cabin with electrical energy. Further, a wire for conducting the energy may be provided as well. According to many embodiments, the cable exits the tower at a position on the tower that is substantially in the middle of the tower. Thereby it is guaranteed that the elevator cabin can stay connected with the tower via the cable during the complete drive and, on the other hand, the necessary length of the cable is as small as necessary. In embodiments where the elevator is not adapted for lifting a person the complete height of the tower, the cable exit may be provided at the position in the tower that corresponds to the middle of the overall elevator lifting length (defined as the distance between the highest position the elevator can reach and the lowest position the elevator can reach).

The term "substantially in the middle of the tower" refers typically to the arithmetic middle of the tower +/- 15 m. In terms of relative deviations, it typically refers to a maximal deviation of 20% in relation to the overall tower heights. The tower is understood as the lengthy construction part upon which the nacelle is positioned.

Fig. 4 exemplarily shows an elevator system with a first pulley 20 and a second pulley 21 that are connected via the cable. The wall of the tower is schematically drawn as reference number 30. The wire 31 exits the tower and has a length of approximately half the tower height. Reference number 32 of Fig. 4 shows the plug of the electrical wire that is adapted to be plugged into in a socket that is arranged on the detachable elevator cabin.

Alternatively to connecting the cabin to the tower in order to provide energy for lifting, it is possible to arrange a storage device in or on the elevator cabin. The storage device can be adapted for storing electrical energy, chemical energy (such as gasoline, diesel, or the like), or even mechanical energy. Such a storage device can be one or more of the group consisting of batteries, accumulators, accumulators of gas pressure, fuel cells, etc.

It is also possible to provide the force for lifting with at least one combustion engine that may be arranged in or on the elevator cabin. In these embodiments, the elevator may be provided with means for storing fuel, such as fuel cells gasoline or diesel.

Fig. 5 shows a further embodiment wherein the elevator cabin is adapted to be lifted by a cable.

According to embodiments, the cable is part of the installed part because it is not possible to thread the wire in the groove of the upper pulley 20 while standing at the bottom of the wind energy system. The cable may be connected to the elevator cabin at one or more positions. Typically, and not limited to the embodiment of Fig. 5, a drive 35 is positioned in or on the cabin as it is shown in Fig. 5. If the detachable elevator cabin is brought to a wind turbine and is correctly positioned and connected to the installed part of the elevator system, the cable is clamped to the drive system of the cabin, thus forming a detachable connection between the installed part and the detachable part. This is exemplarily shown by the two pulleys depicted in the drive 35 in Fig. 5 and the two arrows indicating the turning direction of the pulleys.

According to typical embodiments, a second connection between cable and cabin is provided that is normally a detachable connection. The detachable cable connection is exemplarily shown in Fig. 5 and denoted by reference number 34. The embodiment of Fig. 5 further shows exemplarily the socket 33 for the electrical connection with the tower. According to embodiments, the detachable elevator cabin according to the present disclosure may have a socket for establishing a continuous electrical connection with the tower during lifting.

Further, the cabin of Fig. 5 exemplarily shows a person standing within the cabin. In addition, as shown in Fig. 5, the cabin may be equipped with a load box 55 that might be used for tools, parts, food, or anything the maintenance engineer wants to take along.

Typical sizes of the detachable elevator cabin are more than 50 cm in width and/or length, more typically at least 80 cm in width and/or in length. Typical cabin heights are at least 1.80 m, more typically at least 2.0 m if measured from within the cabin. Typically, when measured from the outside, the height of the cabin is at least 2.2 m, more typically at least 2.5 m. According to typical embodiments, the cabin weights up to 150 kg, more typically up to 200 kg, and even more typically up to 250 kg. The drive system of the elevator system is typically adjusted such that it can lift the cabin with a speed of at least 10 m/min, more typically at least 15 m/min or even more typically at least 20 m/min. Typically, the drive system can be fed by AC if it is connected to an external power supply, for example by a cable 31, or it can be fed by DC in the event that an energy storage device is provided.

The term "cabin" as used herein is understood as an enclosed compartment providing the room for at least one person to stand within the compartment. According to embodiments, it is also possible that the cabin provides room for two persons. The enclosure can be provided with openings such as a door for entering and exiting the compartment and/or at least one window that can be opened. Typically, the elevator can have at least one window made of glass so that the person standing within the cabin can look outside. In comparison to a basket, the "cabin" is typically provided with a roof and side walls. A cabin provides protection against weather conditions such as rain, snow, wind, cold temperatures, or sunshine.

According to some embodiments described herein, the cabin is foldable. "Foldable" in this context is to be understood that the overall size of the cabin can be reduced for transporting the same. When the cabin is put into operation, it is unfolded and fixed in the unfolded position so that it provides a secure elevator cabin to be lifted. According to further embodiments, the elevator cabin may be made dismountable so that specific parts may be taken from the cabin for easier transport. The remaining smaller pieces of the cabin typically have a lower weight and/or smaller dimensions. This has the additional effect of allowing the cabin to be brought into a tower although, in some wind turbines, there are only doors with narrow openings or other narrow passages.

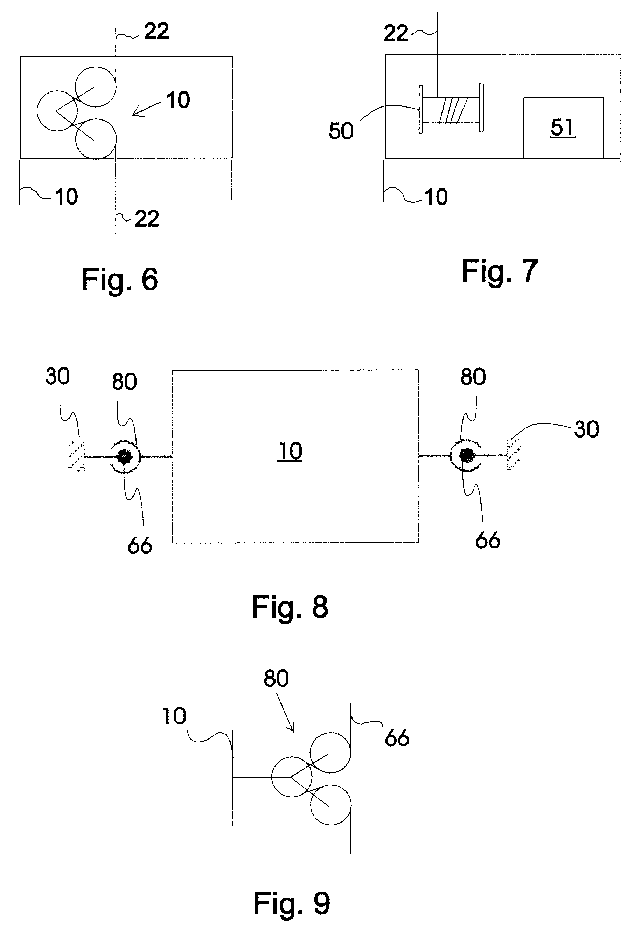

According to typical embodiments, the drive system is positioned on the top of the cabin. The drive system typically comprises an electromotor. In addition, it is possible to provide for a set of pulleys over which the cabin hoisting force is created. This is exemplarily shown in Fig. 6 where a set of pulleys 40 is arranged on top of the cabin 10 with the cable being pressed between the pulleys. Typically, a set of pulleys comprises at least three, more typically at least five pulleys.

Generally, a cable may be used for lifting the elevator cabin with or without winding up the cable in the cabin. In the first case, the cabin is typically provided with a drum on which the cable is wound. This is exemplarily shown in Fig. 7 in which the cable 22 is wound on the drum 50 positioned on the cabin 10. The drum can further act as a drive to lift the cabin up. In other embodiments, an additional drive is provided so that the drum's purpose is mainly to wind the cable up. If the cable is wound up, no freely hanging cables can move within the tower, which increases safety.

Further to the drum 50, Fig. 7 exemplarily shows the storage device 51. Generally, and not limited to the embodiment shown in Fig. 7, a storage device can be positioned in or on the detachable elevator cabin. It is, however, also possible that the storage device is positioned on the tower or on the tower foundation. In those cases, it might be necessary to provide for a wire or a tube (e.g., for gas) to connect the storage device with the elevator cabin.

If the cable is not wound up, the cable of the elevator system hangs between the top and the bottom of the elevator system. This is exemplarily shown in Fig. 3. By employing such a design, the cable used for elevator hoisting can also be used in a fall arrester system that may be attached to the harness of a climber who is using the additional ladder of the tower.

In general, despite the provision of the elevator as described herein, the tower of the wind energy system according to this disclosure may comprise a ladder that allows climbing up and down the tower. Typically, a ladder is used as an emergency ladder in the event that the elevator is not working.

According to many embodiments, a wind energy system adapted for cooperating with the detachable elevator is equipped with at least one guide for guiding the elevator cabin. A guide can be, for instance, at least one cable or rail, more typically two cables or two rails. Typically, a rail is a bar extending from one post to another and serving as a guard for the elevator cabin. In some embodiments, cables can be used both for guiding the cabin and lifting the cabin. In other embodiments, cables may be used for lifting and a separate guide such as guiding cables may be used for guiding the cabin.

The elevator cabin may be equipped with panels or the like that allow for removal in case the elevator stops functioning and a descent or ascent must be continued without the elevator. It is therefore typical that the elevator cabin's guide is arranged such that a person can exit the cabin everywhere within the tower and can reach the ladder of the tower. Typically, the cabin moves in the vicinity of the ladder during the whole journey. In order to facilitate emergency descents out of the cabin, foot arrests, grips, and attachment points for safety lanyards may be provided in or on the cabin.

Fig. 8 shows embodiments of an elevator cabin in a horizontally cross-sectional view. The cabin 10 is provided with a guiding adapter 80 mounted to the cabin. A guiding adapter can generally be used in all embodiments described herein and is typically fixed to the detachable elevator cabin. The guiding adapter is generally adapted for interacting with a guide, such as by receiving a guide of the wind energy system. In the embodiment of Fig. 8, the guiding adapter is a U-shaped opening for holding the guide 66. In Fig. 8, the guides are guiding cables having a diameter larger than the opening of the U-shape guiding adapter.

According to embodiments, and not limited to the embodiment of Fig. 8, the cabin is provided with two guiding adapters 80. Accordingly, the wind energy system may be provided with two guides 66. In more detail, according to embodiments, the elevator cabin is secured to at least two guides, more typically to at least three guides.

According to other embodiments, possible guiding adaptors may be provided with rolls in order to avoid friction. For instance, Fig. 9 shows a possible guiding adaptor adapted for cooperating with a cable. Other adaptors for cooperating with rails may be adapted for encompassing the rails and securing the connection thereto by friction or by wheels or the like.

Alternatively to guiding cables, the elevator cabin may be guided by rails. According to some embodiments, the guiding of the elevator may be in combination with the ladder structure. For instance, the rails may be mounted to the outer edges of the ladder. According to other embodiments, the rail for guiding the cabin also acts as the handrail of the ladder.

Typically, the ladder is attached to one or more tower elements. This tower element can be the tube of a wind turbine comprising one tube only. In particular in the case of open structure wind turbines, the wind energy system tower is often provided with three poles that act as carriers of the tower and that are fixedly connected to each other by a metal lattice structure. In many embodiments, the ladder is attached to one of these poles.

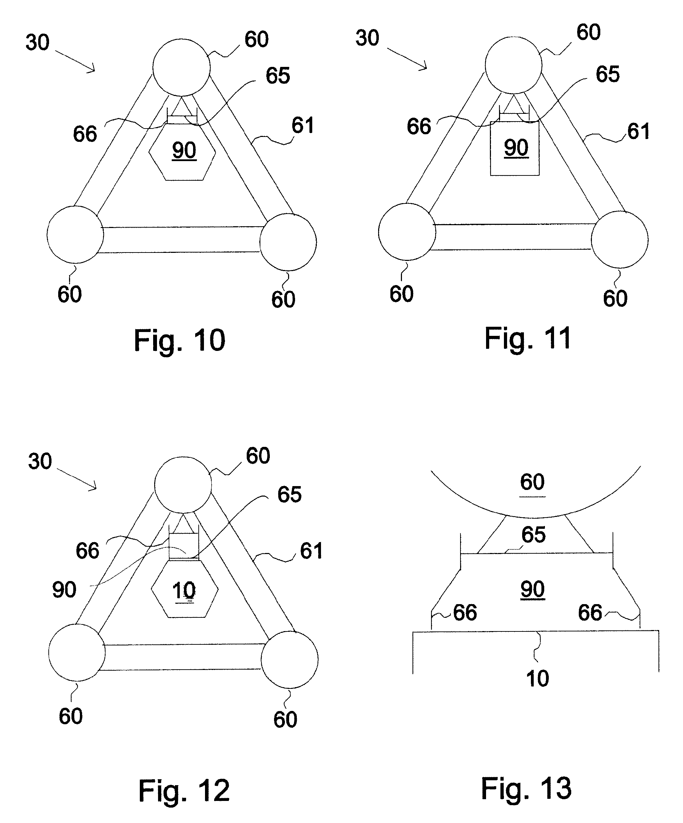

Normally, the attachment is such that, in standard climbing practice, a climber faces the pole on which the ladder is attached during climbing. This is exemplarily shown in Fig. 10, which shows the cross section of an open structure tower 30 comprising three poles 60 that are connected via bars 61. The ladder 65 is connected to one of the three poles 60. The ladder 65 includes guiding rails 66 for guiding the elevator cabin 10. A design like this can be rather space efficient.

In particular, according to all embodiments described herein, the cross section of an elevator can generally be triangular, rectangular as it is shown in Fig. 11, pentagonal, or even hexagonal as it is exemplarily shown in Fig. 10.

An alternative arrangement is to arrange the ladder such that a climber is supposed to climb between the ladder and the pole the ladder is attached to. Typically, in these cases, the cabin is positioned for moving between the ladder and the respective pole.

For instance, the ladder can be equipped with rails for guiding the cabin, normally at its backside. Thus the climber is independent of the elevator so that a climber can pass the elevator without interference. This example is exemplarily shown in Fig. 12 where - schematically - the space 90 between pole and ladder is increased in comparison to the embodiment shown with respect to Fig. 12. In typical embodiments, the space between pole and ladder is at least 60cm, more typically at least 80cm, and even more typically at least 100cm.

Fig. 13 shows further embodiments of the arrangement of a ladder and a cabin. As shown, the ladder 65 is mounted to the pole 60 in such a way that a climber climbs on the ladder with the front face directed to the pole, i.e., the ladder is arranged such that a climber is facing the pole. Nonetheless, the guide 66 for the cabin 10 is arranged such that both climber and cabin can be on the same level without interference. In particular, if the elevator is not functioning anymore, it is typical that the elevator is equipped with a door that opens to the ladder so that a person in the elevator can exit and reach the ladder without problems.

Embodiments having a sufficient space 90 allow someone to exit from the elevator directly to the ladder and turn back without turning a corner. This allows easy maintenance and emergency exit. In addition, as exemplarily set forth, it is typical that the guide for the cabin is connected to the ladder system. This is not only possible with rails as guides but also with cables as guides. Due to the fact that, according to an embodiment of the present disclosure, the cabin is guided within the tower, the guides might be subject to corrosion or the like, particularly in the case of non-closed tower configurations. In every case, in particular in the case of an open structure tower configurations, it is possible to protect the guides from weather conditions, for example, by winding up the cables at those times where the elevator is not needed.

For instance, it could be possible to provide a remote control on the installed part of the elevator system that is typically arranged on the top of the wind turbine. One effect is that after maintenance and removal of the cabin, the cable is wound up by the engineer so that it is secured on a drum that is preferably not exposed to sun or rain. Before maintenance, the engineer would have to uncoil the wire via the remote control so that he/she could mount it to the detachable elevator cabin.

A remote control could also be used in those embodiments of the present disclosure where the power supply is arranged at the top end of the cable, i.e., on the upper part of the wind energy system. The commands to the power supply can be given via the remote control. Generally, remote control may be employed by cable transmission or wireless radio communication.

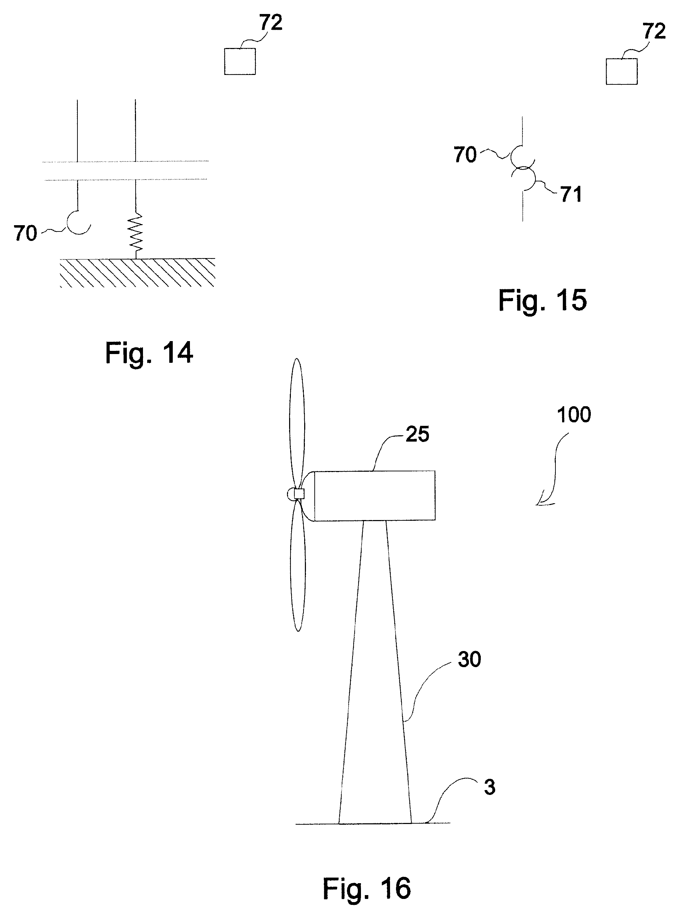

According to embodiments, the elevator system can serve as a simple goods hoist as well. For instance, as it is shown in Fig. 14, the end of the cable for attaching the elevator cabin thereto can have the shape of a hook onto which goods can be fastened. By combining this embodiment with the remote control and a drive that is positioned in the wind energy system, the installed system can serve both for hoisting goods and for hoisting the detachable elevator cabin.

The latter case is shown in Fig. 15 where the cabin 10 is fastened to the hook 70 via the cabin hook 71. For receiving the commands, the wind energy system is typically equipped with a remote control receiver. This is exemplarily shown as 72 in Figs. 14 and 15.

Fig. 16 shows schematically a wind energy system 100 having the nacelle 2 and the tower 30. According to embodiments, every level between the nacelle 2 and the foundation 3 can be reached by the detachable elevator cabin as described.

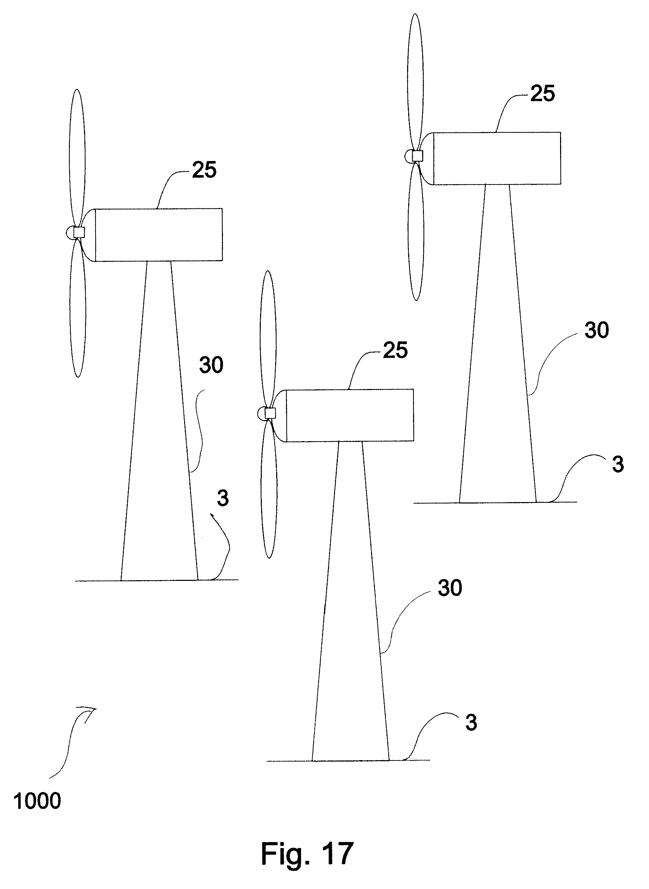

The present disclosure is also directed to a wind park having at least two wind energy systems wherein at least two of the wind energy systems are equipped with an installed part of the described elevator system. According to typical embodiments, all wind energy systems are equipped with the installed part of the elevator system. Typically, the wind park shares one detachable elevator cabin. This elevator cabin can be transported to the wind energy system of the wind park that needs maintenance. In typical embodiments, one wind energy system comprises a place for depositing the cabin if it is not needed. A wind park 1000 is schematically shown in Fig. 17.

The present disclosure is further directed to a method of reaching a desired level of a wind energy system. The level might be the level of the nacelle of the wind energy system or an intermediate level of the wind energy system. An intermediate level of the wind energy system is understood as being somewhere between the foundation and the nacelle. For instance, it might become necessary that a maintenance engineer needs to check the tower segment connections located at different intermediate heights. According to a further example, it might become necessary to reach the level right below the nacelle.

In order to do so, an engineer has to bring the detachable elevator cabin, as disclosed, to the tower. It might be possible to take it directly to the tower with a truck. In other cases, the use of a trailer might be useful. The engineer typically has to unload the elevator cabin. In those embodiments where the cabin is equipped with pulleys or the like, the engineer can push the cabin to the desired position for connecting the cabin with the installed system of the wind turbine. Once all this is arranged, the engineer can enter the cabin and lift herself/himself up to the nacelle.

According to a further aspect, a method for maintaining a wind energy system is disclosed. The method comprises the steps of reaching a desired level such as the nacelle as described previously. Once the engineer has arrived, she/he can undertake the necessary maintenance work. In addition, the engineer can also undertake maintenance work at the tower by moving the elevator cabin up to the desired height and exiting the cabin at that height.

According to an aspect of the present disclosure, an elevator system is provided, part of which is installed and another part is detachable. The detachable part can be shared between several turbines. Typically, the parts can be classified as structural, tower, and controls (including measurement equipment). According to embodiments, the power conversion is done at the installed part. In other embodiments, as described, the power conversion, i.e., the drives are positioned on the detachable part.

The installed part remains in each turbine and is typically kept to a minimum in order to keep costs low. The installed part may include the attachment points, the power supply cables, and/or even the drives, i.e., the force transmitting means. Further, if present, the installed part may include guides for guiding the detachable elevator once it is mounted.

The detachable part may include the elevator cabin, means for facilitating the transport of the cabin on the ground such as pulleys, rollers or the like, and/or a power system. Of course, these lists are not considered as being exhaustive.

This written description uses examples to disclose the invention, including the preferred mode, and also to enable any person skilled in the art to practice the described subject-matter, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope is defmed by the claims, and may include such modifications and other examples that occur to those skilled in the art. Such other examples are intended to be within the scope of the claims if they have structural elements that do not differ from the literal language of the claims, or if they include equivalent structural elements with insubstantial differences from the literal language of the claims:

While the foregoing is directed to embodiments, other and further embodiments may be devised without departing from the basic scope, and the scope is determined by the claims that follow.

Various aspects and embodiments of the present invention are defined by the following numbered clauses:
1. A detachable elevator cabin configured for use in a wind energy system,
   the detachable elevator cabin being configured to interact with an installed part of an elevator system of a wind energy system and adapted to be lifted up the tower of the wind energy system, with the installed part being permanently installed in the wind energy system.
2. The detachable elevator cabin according to clause 1 comprising a guiding adaptor for interacting with a guide of the wind energy system.
3. The detachable elevator cabin according to any preceding clause comprising a drive that is adapted to lift the detachable elevator cabin.
4. The detachable elevator cabin according to any preceding clause comprising a storage device for storing energy that can be used for lifting the detachable elevator cabin.
5. The detachable elevator cabin according to any preceding clause having a socket for establishing a continuous electrical connection with the tower during lifting.
6. The detachable elevator cabin according to any preceding clause comprising a multitude of pulleys positioned on the bottom of the elevator cabin for moving the detachable elevator cabin.
7. The detachable elevator cabin according to any preceding clause wherein the detachable elevator cabin is at least one of foldable and dismountable.
8. A wind energy system comprising an installed part of an elevator system, the installed part being permanently installed at the wind energy system and being adapted to interact with a detachable elevator cabin in order to lift the detachable elevator cabin.
9. The wind energy system according to any preceding clause, further comprising a guide for guiding the detachable elevator cabin during lifting.
10. The wind energy system according to any preceding clause wherein the guide is part of a ladder system installed in the tower.
11. The wind energy system according to any preceding clause wherein the guide is a rail system.
12. The wind energy system according to any preceding clause wherein the guide is at least one cable.
13. The wind energy system according to any preceding clause, further comprising at least one cable for lifting the detachable elevator cabin.
14. The wind energy system according to any preceding clause, further comprising at least one lifting pulley positioned on the top of the wind energy system.
15. The wind energy system according to any preceding clause, further comprising an electric power output positioned substantially in the middle of the wind energy system tower.
16. The wind energy system according to any preceding clause, further comprising a remote control receiver.
17. The wind energy system according to any preceding clause, wherein the tower comprises an open structure lattice.
18. The wind energy system according to any preceding clause, further comprising at least one drive for lifting the elevator cabin.
19. The wind energy system according to any preceding clause, further comprising a detachable elevator cabin being configured to temporarily interact with the installed part of the elevator system of the wind energy system and adapted to be lifted up the tower of the wind energy system.
20. A method for reaching a desired level of a wind energy system comprising, the wind energy system having a tower and being adapted for interacting with a detachable elevator cabin:
   a. positioning a detachable elevator cabin on or at the tower;
   b. connecting the detachable elevator cabin with the wind energy system; and,
   c. lifting the detachable elevator cabin to the level.

## Claims

1. A detachable elevator cabin (10) configured for use in a wind energy system (100), the detachable elevator cabin (10) being configured to interact with an installed part of an elevator system of a wind energy system and adapted to be lifted up the tower (101) of the wind energy system, with the installed system being permanently installed in the wind energy system.

2. The detachable elevator cabin according to claim 1 comprising a guiding adaptor (80) for interacting with a guide (66) of the wind energy system.

3. The detachable elevator cabin according to claim 1 or 2 comprising a storage device (70) for storing energy that can be used for lifting the detachable elevator cabin.

4. The detachable elevator cabin according to any of claims 1-3 wherein the detachable elevator cabin comprises at least one drive (35).

5. A wind energy system (100) comprising an installed part of an elevator system, the installed part being permanently installed at the wind energy system and being adapted to interact with a detachable elevator cabin (10) in order to lift the detachable elevator cabin.

6. The wind energy system (100) according to claim 5, further comprising a guide (66) for guiding the detachable elevator cabin (10) during lifting.

7. The wind energy system (100) according to claim 6 wherein the guide is part of a ladder system (65) installed in the tower.

8. The wind energy system (100) according to any of claims 5-7, wherein the tower comprises an open structure lattice.

9. An elevator system comprising a detachable part and an installed part, the detachable part comprising the detachable elevator cabin according to any of claims 1-4, and the installed part comprising the wind energy system (100) according to any of claims 5-8.

10. A method for reaching the nacelle of a wind energy system (100) comprising, the wind energy system (100) having a tower and being adapted for interacting with a detachable elevator cabin:
a. positioning a detachable elevator cabin in or at the tower;
b. connecting the detachable elevator cabin with the wind energy system;
and,
c. lifting the detachable elevator cabin to the nacelle.
